# NEW EUROPEAN PATENT SPECIFICATION

(11) **EP 0 217 516 B2**
(45) Date of publication and mention of the opposition decision: **07.02.1996**
(45) Mention of the grant of the patent: 04.09.1991
(21) Application number: 86306256.8
(22) Date of filing: 13.08.1986
(51) Int. Cl.: C08J 9/224, C08J 9/16

(54) **Expandable polyvinyl (idene) aromatic particles, process for preparing them and molded articles produced therefrom**
Expandierfähige polyvinyl(iden)aromatische Partikel, Verfahren zu ihrer Herstellung und geformte Gegenstände
Particules expansibles à base de polymères vinyl(idène)aromatiques, leur procédé de préparation et articles formés à partir de ceux-ci

(30) Priority: 16.08.1985 CH 3538/85; 12.06.1986 CH 2474/86
(43) Date of publication of application: 08.04.1987
(73) Proprietor: THE DOW CHEMICAL COMPANY, Midland Michigan 48640-1967 (US); DOW CHEMICAL (HELLAS) A.E., GR-65024 154 10 Psychico Athens (GR)
(72) Inventor: Kotsonis, Ioannis, I-56018 Tirrenia (Pisa) (IT); Apostolopoulos, Ioannis, CH-8820 Wadenswil (CH); Terlixidis, Periclis, Kypseli Athens (GR)
(74) Representative: Raynor, John

(56) References cited:
- EP-A- 0 106 129
- AU-B- 547 069
- CA-A- 1 046 200
- DE-A- 1 620 954
- DE-A- 3 317 169
- GB-A- 1 181 371
- US-A- 2 816 827
- US-A- 3 856 903
- US-A- 4 429 058
- CHEMICAL ABSTRACTS, vol. 81, no. 22, 02 December 1974, Columbus, OH (US); p. 38, no. 137092y

## Description

### Description

This invention relates to heat expandable and heat expanded particles of a polyvinyl(idene) aromatic compound; process for preparing them; molded articles produced therefrom; and the use of the molded articles as packaging material.

Heat expandable polystyrene particles, expansion of the particles and the conversion of such particles into various shaped objects are well known in the art.

Part of the state of the art relates to the process of producing molded articles from partially preexpanded polystyrene particles. The preexpanded polystyrene particles containing a blowing agent are further expanded in a mold by heat provided by injection of steam. After the steam has been removed from the mold, there is a period of time in which the article must remain in the mold before removal. The minimum time the article must remain in the mold before removal is generally referred to as the "cooling time". A great deal of work has been done by artisans in the field in reducing the cooling time in order to increase the production rate of the molded articles.

For example, in the technical bulletin "Verkürzung der Kühlzeit durch Oberflächenbehandlung von Styropor" published in November 1971 by BASF, it is suggested, that the cooling time of foamed articles produced from Styropor^{®} can be reduced by coating the Styropor particles with 0.1 to 0.4 weight percent paraffin oil. The Styropor^{®} particles, prepared by suspension polymerization, are preferably coated after preexpansion.

Furthermore, it has been suggested to apply a dry coating of a glyceryl C₁₆-C₂₀ carboxylate and a metal stearate to expandable polystyrene particles (GB patent 1,409,285). The coating is intended to prevent agglomeration of the expandable beads during expansion and reduce the cooling time. For the same reason, some experts in the art have suggested applying various mixtures of glycerine esters of fatty acids (in their dry form or as aqueous dispersions) to the expandable polystyrene particles. Various coatings and their disadvantages have been discussed in European patent application 109,492. The teaching of EP application 109,492 tries to overcome these disadvantages by employing organosols of glycerine esters of long chain fatty acids in aliphatic hydrocarbons of 3 to 8 carbon atoms.

Others skilled in the art have suggested the inclusion of stearic acid and calcium stearate in expandable polystyrene particles in order to shorten the cooling time (see Canadian patent 1,046,200).

Other artisans focussed on preventing undesired adhesion of polystyrene particles to one another. For example, they have suggested coating the polystyrene beads with a powder composition comprising magnesium stearate and zinc stearate (see U.S. patents 4,448,900 and 4,446,208) in order to reduce the adhesion of expandable polystyrene particles to one another.

The above-mentioned teachings of those skilled in the art facilitate the production of the molded articles from the heat expanded polystyrene beads. The molded articles are for example used for insulation or packaging purposes. However, these known molded articles, e.g. boards prepared from the expanded polystyrene particles, are relatively stiff and non-resilient. The articles are frequently brittle. Many of these foams when compressed do not recover to approximately their original dimensions. Accordingly, such molded articles produced from the heat expanded polystyrene beads are generally not considered to be useful as multi-impact cushion packaging material.

Japanese patents J-72018428 (JP 47-18428) and J-76046536 (JP 51-46536) address these deficiencies of the known molded polystyrene articles. The purpose of Japanese patent J-72018428 is to provide expandable polystyrene resins with better shock absorption ability, resiliency and better surface appearance. J-72018428 discloses compositions of
(1) a styrene resin containing 60 weight percent or more of styrene and 3.5 weight percent or more of butadiene, and having a softening point of more than 100°C and
(2) a blowing agent having a boiling point which is less than the softening temperature of the polymer.

The purpose of Japanese patent J-76046536 is to improve the expandable polystyrene resins disclosed in Japanese patent J-72018428, especially to attain an expandable polystyrene resin that has a short cooling time and does not shrink after being molded. To attain this object it is taught that foamable compositions are prepared from styrene copolymers containing butadiene as a comonomer and having a Vicat softening point of 100°C or more, and a melt index of 3 or more. The foamable compositions contain a lower boiling, hydrocarbon foaming agent.

Although the above-mentioned Japanese publications state that the molded, foamed articles produced according to their teachings give improvements in shock absorption ability, it remains highly desirable to improve the shock absorption ability of molded, foamed articles. Preferably, the shock absorption ability of molded polystyrene articles should be improved without adversely affecting their mechanical properties, such as tensile strength, tensile elongation or thickness recovery after compression or the process for producing the molded articles in an undesired manner. For example, the cooling time of the resultant molded polystyrene articles having the improved properties should not be increased significantly.

It has been found that this arm can be attained by providing new heat expandable particles of a polyvinyl(idene) aromatic compound described below from which molded, foamed articles having the desired properties can be prepared.

US Patent 4429058 discloses expandable polystyrene particles which include pentaerythritol tetrastearate as a plasticizer, and which are coated with glyceryl monostearate in order to reduce the final mold cooling cycle when molded articles are produced from the particles.

Australian Patent 547069 discloses heat expandable vinyl aromatic polymer beads which contain a "prefoam expanded bead-bulk density accelerator compound". The accelerator compound is an organic liquid which has a molecular weight of at least 50, and a boiling point of at least 200°C.

One aspect of the present invention is heat expandable particles of a polyvinyl(idene) aromatic compound which contain a blowing agent and which are characterized in that the polyvinyl(idene) aromatic compound has an average molecular weight M_{w} (weight average) of more than 190,000, the particles contain from 0.8 to 2.6 percent of a plasticizer which is a mineral oil/and or an aromatic oligomer, based on the total weight of the polyvinyl(idene) aromatic compound and plasticizer, and the particles are at least partially coated with one or more glycerides of a fatty acid and/or with a mineral oil.

A further aspect of the present invention is a process for preparing the heat expandable particles described above by plasticizing a polyvinyl(idene) aromatic compound with such a plasticizer and optional internal additives in an extruder, mixing the plasticized mass with a blowing agent, cooling the mass before and/or after extruding it into strands, dividing the strands into particles and coating the particles at least partially with one or more glycerides of a fatty acid and or with a mineral oil.

Another aspect of the present invention is heat expanded particles of a polyvinyl(idene) aromatic compound which are characterized in that the polyvinyl(idene) aromatic compound has an average molecular weight M_{w} (weight average) of more than 190,000, the particles contain from 0.8 to 2.6 percent of such a plasticizer, based on the total weight of the polyvinyl(idene) aromatic compound and plasticizer, and the particles are at least partially coated with one or more glycerides of a fatty acid and/or with a mineral oil.

A further aspect of the present invention is a molded, foamed article made of the heat expanded particles described above.

A further aspect of the present invention is a method for preparing a molded, foamed article by
(A) heating a plurality of the heat expandable particles described above to cause some expansion thereof and to provide expanded particles,
(B) confining a mold filling quantity of the expanded particles in a mold,
(C) heating the particles in the mold to cause further expansion of the expanded particles and to cause the particles in the mold to bond together to form a substantially unitary body and preferably
(D) subsequently removing the foamed article from the mold.

A further aspect of the present invention is the use of said molded, foamed article as packaging material.

The molded, foamed articles of the present invention have excellent shock absorption ability and mechanical properties such as tensile strength, tensile elongation or thickness recovery after compression which are adequate for their intended use. Furthermore, they have smooth, soft surfaces and a pleasant appearance. The molded articles of the invention have a relatively short cooling time.

The expandable particles comprise a polyvinyl(idene) aromatic compound as the main component. The term "polyvinyl(idene) aromatic compound" as used herein includes homopolymers and copolymers produced by polymerizing vinyl aromatic and/or vinylidene aromatic monomers, preferably vinyl aromatic monomers, such as for example styrene, the divinyl benzenes or vinyl naphthylene.

Representative vinyl(idene) aromatic monomers include styrene. alkyl-substituted styrenes such as alpha-alkylstyrenes (e.g., alpha -methylstyrene and alpha-ethylstyrene), and ring-substituted styrenes (e.g., vinyltoluenes, particularly p-vinyltoiuene, o-ethylstyrene, t-butylstyrene and 2,4-dimethyl styrene); ring-substituted halostyrenes such as chloro-styrenes or 2,4-dichloro-styrene and styrenes substituted with both a halo and alkyl group such as 2-chloro-4-methylstyrene and other monomers such as vinyl anthracene and mixtures thereof. In general, the polyvinyl(idene) aromatic compound is preferably derived from styrene or a combination of styrene and alpha-methylstyrene. Advantageously, the compound contains from 10 to 50, more advantageously from 15 to 40, weight percent of the alpha-methylstyrene, based on the total weight of the styrene and alpha-methyistyrene. Styrene is the most preferred monomer.

Styrene copolymers should contain a predominant amount of polymerized styrene or alpha - methylstyrene, generally at least 90 weight percent, preferably at least 92 weight percent and more preferably at least 95 weight percent. based on the weight of the polymer.

Minor amounts of other comonomers can also be copolymerized with the vinyl(idene) aromatic monomer. Representative of such other comonomers are acrylonitrile, methacrylonitrile, ethacrylonitrile and mixtures thereof. Preferred of the unsaturated nitriles is acrylonitrile. Further representatives of such monomers are the conjugated dienes such as butadiene and isoprene: the alpha, beta-ethylenically, unsaturated carboxylic acids and esters thereof such as acrylic acid, methacrylic acid, methylacrylate, methyl methacrylate, ethylacrylate and 2-ethylhexyl acrylate: the ethylenically unsaturated amides such as acrylamide and methacrylamide; vinylidene chloride and vinylidene bromide; and vinyl esters such as vinyl acetate. If employed, these comonomers will generally be employed in amounts of up to 10, preferably up to 5, weight percent, based on the total weight of the monomers employed in preparing the polyvinyl(idene) aromatic compound. If the polyvinyl(idene) aromatic compound is a copolymer, the copolymerized monomer or the grafted polymer is preferably the rubber material described below. For the sake of convenience the description will hereafter refer to "polystyrene" although the invention is not restricted thereto but also relates to expandable particles containing other polyvinyl(idene) aromatic compounds.

The best properties of the molded, foamed articles can be obtained by a proper selection of the plasticizer in the expandable polystyrene particles in connection with a proper selection of the average molecular weight M_{w} (weight average) of the polystyrene.

At a set weight amount of plasticizer (which must not be lower than the above-mentioned weight pecentage), the higher the weight average molecular weight of the polystyrene is, the better is in general the shock absorption ability of the molded, foamed articles. This is particularly true in the lower molecular weight ranges. For example, the shock absorption ability of the molded, foamed articles is considerably better when the average molecular weight M_{w} of the polystyrene is more than about 210.000 than when it is less than 190,000 (at a sea weight amount of plasticizer). The influence of the molecular weight on the shock absorption ability is however less significant if the average molecular weight M_{w} of the polystyrene is about 270,000 or more. Accordingly, the average molecular weight M_{w} of the polyvinyl(idene) aromatic compound in the expandable particles of the present invention is more than 190,000, preferably about 200,000 or more and more preferably 210,000 or more; the best results being obtained when the average molecular weight M_{w} is about 220,000 or more. There is no upper limit with respect to the average molecular weight M_{w}. For reasons of productivity however, the average molecular weight M_{w} of the polyvinyl(idene) aromatic compound is advantageously about 300,000 or less, preferably about 280,000 or less and more preferably about 260,000 or less.

The weight and the number average molecular weight M_{w} and Mₙ can be determined by gel permeation chromatography. The molecular weight distribution D is preferably about 2.3 or more, more preferably about 2.4 or more. The molecular weight distribution D is the weight average molecular weight M_{w} divided by the number average molecular weight Mₙ.

The amount of plasticizer in the particles is from 0.8 to 2.6 percent, based on the total weight of polyvinyl(idene) aromatic compound and plasticizer. If the amount of plasticizer is too low, the shock absorption ability of the molded, foamed parts is undesirably low. Preferably, the amount of plasticizer is 1.0 percent or more. If the amount of plasticizer is too high, the shock absorption ability and the dimensional stability of the foamed molded articles are undesirably low. However, the appropriate upper limit of the plasticizer amount depends on the weight average molecular weight of the polyvinyl(idene) aromatic compound. In general, the higher the average molecular weight M_{w} is, the less is the influence of increased amounts of plasticizer. At low average molecular weight M_{w}, for example about 200,000 or less, the amount of plasticizer is preferably not more than 2.4 weight percent, more preferably not more than 2.0 weight percent. The plasticizer amount is not more than 2.6, more preferably not more than 2.2 weight percent, based on the total weight of the polyvinyl(idene) aromtic compound and the plasticizer. Those skilled in the art can select the preferred plasticizer amount according to this teaching and routine testing.

The preferred amount of plasticizer depends on the type of plasticizer included in the particles. Preferred plasticizers are oligomers of an aromatic compound such as styrene or alpha-methyl styrene. Preferred oligomers are dimers and/or trimers.

Mineral oils which are liquid at standard conditions, i.e. at 25°C and one bar pressure are also useful as plasticizers. A useful mineral oil is for example available from ESSO S.A.F. as PRIMOL® 351. Other useful mineral oils are paraffin oils.

In general, the mineral oils are less effective as plasticizers than the aromatic oligomers. Preferably, 30 percent or more, more preferably from 50 to 100 percent, most preferably from 60 to 80 percent of the total plasticizer amount are aromatic oligomers.

The plasticizers can be added to the polyvinyl(idene) aromatic compound. However, it can also originate from the polymerization process and depending on the type of process, variable amounts of residual oligomers such as dimers or trimers frequently remain in the resulting polymer product. The amount of plasticizer originating from the polymerization process is included in the amounts of plasticizer stated above. The content of styrene oligomers can be determined by gas chromatography.

The expandable polystyrene particles comprise preferably from 0.1; more preferably from 0.5 and most preferably 1.0 percent rubber and preferably up to 10; more preferably up to 5 and most preferably up to 3 percent rubber, based on the total weight of the particles. Although not mandatory, the inclusion of a rubber into the polystyrene particles is desirable.

When preparing the polystyrene resin employed in making expandable polystyrene particles, the rubber material, if used, is preferably at least partially dissolved in the monomeric styrene before the monomeric material is polymerized. Accordingly, the rubber material can be partially or completely copolymerized with the styrene, depending for example on the type of rubber material employed and on the conditions used for producing the polystyrene.

For example, when using polybutadiene as a rubber material, the polystyrene material may comprise polystyrene/polybutadiene graft polymer. As an alternative, the rubber material can be admixed to the polymerized styrene.

Useful rubber materials are known to those skilled in the art. Preferred examples of rubber materials are polybutadiene, polyisoprene, polyisobutylene, styrene/butadiene block copolymers or other copolymers having a relatively high butadiene content. In the styrene/butadiene copolymers only the butadiene weight is taken into account for calculating the desired amount of rubber in the present invention. Also mixtures of said rubber materials are useful for the purpose of the present invention.

Preferred representatives of polybutadiene rubbers are the linear, high molecular weight, low cis-content homopolymers of butadiene. In general, the cis-content of such polybutadiene rubbers is less than 55, preferably less than 50 percent, as determined by conventional IR spectometry techiques. The weight average molecular weight, as determined by gel permeation chromotography techniques described by ASTM designation D-3536 and expressed without correction for the differences between the rubber and polystyrene standards, is generally at least 325,000, preferably 375,000. The molecular weight distribution D is preferably less than 3, more preferably less than 2.75. High cis-content polybutadiene rubbers are also useful, but not preferred for the purpose of the present invention.

Generally, the heat expandable particles comprise a nucleator for the blowing agent, in order to obtain uniform and small cells after foaming of the expandable polystyrene particles. Any known nucleators are useful, for example talc, powdered metals, pigments or other similar powdery materials whose particles can serve as nuclei for the evaporation. The particle size of the nucleator should be extremely fine. Preferred examples are zinc and calcium salts of long chain fatty acids, preferably zinc stearate, calcium stearate or calcium laurate; solid inorganic compounds of an average particle size of 0.01 to 200, preferably 1 to 100 µm such as oxides or silicates, for example magnesium oxide, zinc oxide, aluminum oxide or magnesium silicate; carbonates such as calcium carbonate, sodium carbonate, magnesium carbonate; and silica gel, as for example described in European patent application 73,905. Furthermore, silicic acid, clay, talc and boric acid may be used. Mixtures of nucleating agents are also useful. Calcium stearate is the most preferred nucleator. If the heat expandable polystyrene particles contain nucleators, the amount of the nucleators, based on the weight of the polystyrene, is generally as least 0.01, preferably at least 0.02 and most preferably at least 0.05 weight percent; up to 5 preferably up to 3 and most preferably up to 1.5 weight percent.

The heat expandable particles of a polyvinyl(idene) aromatic compound, e.g. of polystyrene, can further comprise optional known ingredients and additives such as for example ultra violet light stabilizers, coloring agents, filler and fire retardant agents.

Fire retardant agents are, for example, used in amounts up to 5 percent, preferably from 0.2 to 4 percent and most preferably from 0.4 to 2 percent, based on the weight of the polyvinyl(idene) aromatic compound. Useful fire retardant agents are for example organic halogenated compounds, preferably brominated compounds. The brominated compounds generally comprise diabromoalkyl radicals of 2 to 9, preferably 3 to 7, carbon atoms, preferably dibromopropyl radicals. The aromatic and particularly the cycloaliphatic compounds can also contain bromine atoms which are directly linked to the aromatic or cycloaliphatic ring. The cycloaliphatic brominated compounds preferably also contain chlorine atoms. The brominated compounds which are solid at room temperature, particularly those which have a melting point of 70 to 200°C, preferably 100 to 180°C, are preferred. Preferred examples are completely or partially brominated oligomers of butadiene or isoprene of an average polymerization degree of 2 to 20. Particularly preferred are 1,2,3,4- or 1,2,5,6-tetrabromocyclooctane and 1,2,5,6,9,10--hexabromocyclododecane.

Further useful fire retardant agents are known to those skilled in the art and are described in DE-OS 27 43 127. Mixtures of fire retardant agents are also useful.

The heat expandable particles can also contain additional adjuncts such as anti-static agents or dyes in usual amounts.

All the additives described above are designated herein "internal additives" - as opposed to additives which are used for coating the expandable particles which additives will be described further below.

The heat expandable particles furthermore contain a blowing agent. The blowing agent is generally used in an amount of 2 to 20 percent, based on the weight of the polyvinyl(idene) aromatic compound. Preferably, the heat expandable particles contain the blowing agent in an amount of at least 3 percent, more preferably at least 5 percent; and up to 15 percent, more preferably up to 9 percent, based on the weight of the polyvinyl(idene) aromatic compound.

Any known blowing agents including mixtures thereof are useful, for example aliphatic hydrocarbons, cyclic aliphatic hydrocarbons and halogenated aliphatic hydrocarbons.

Preferred examples are propane, butane, pentane (e.g. normal pentane, isopentane or neopentane), hexane, heptane and petroleum ether; cyclopentane and cyclohexane; ethyl chloride, methyl chloride, 1-chloro-1,-1 difluoroethane, 1,2-dichloro-1,1,2-trifluoroethane, pentafluorocyclobutane, dichlorodifluoromethane, 1,2,2-trifluoro-1,1,2-trichloroethane, and fluorocarbons such as Freon 114 and Freon 11 (which are commercially available from DuPont). Gases like carbon dioxide, ammonia, air, nitrogen, helium or other inert gases are also useful blowing agents.

Mixtures of these compounds are also useful, for example mixtures of dichlorodifluoromethane with dichlorofluoromethane or trichlorofluoromethane, of normal pentane with dichlorodifluoromethane, of (m)-ethyl chloride with dichlorodifluoromethane, 1-chloro-1,1-difluoroethane or dichlorodifluoromethane, mixtures of carbon dioxide with dichlorofluoromethane, dichlorodifluoromethane, 1 chloro-1,1 -difluoroethane, trichlorofluoromethane, methyl chloride or with ethyl chloride. Generally such mixtures contain 30 to 70 parts by weight of the first component and 70 to 30 parts by weight of the second component. Preferred is a three component mixture containing from 3 to 45 weight percent carbon dioxide, from 5 to 97 weight percent ethyl chloride and from 0 to 90 weight percent dichlorodifluoromethane or 1-chloro-1,1-difluoroethane.

The expandable particles of the polyvinyl(idene) aromatic compounds described above are at least partially coated with one or more glycerides of a fatty acid and/or with a mineral oil. Preferably, the fatty acid glyceride(s) are used together with the mineral oil for coating the expandable particles. Very good results are achieved by dispersing the fatty acid glyceride(s) in the mineral oil. The expandable particles can be easily coated with the dispersion.

Only small amounts of mineral oil are required. The amount of mineral oil generally used is at least 0.001 percent, preferably at least 0.003 percent, most preferably at least 0.006 percent and up to 0.15 percent, preferably to 0.08 percent, most preferably to 0.05 percent by weight of the polyvinyl(idene) aromatic compounds(s).

Mono-, di- and triglycerides of the fatty acids are useful; preferably mixtures of mono- diand triglycerides are used. The fatty acids hake preferably 14 to 24 carbon atoms, most preferably 16 to 18 carbon atoms. Preferably mono- di and/or triglycerides of stearic acid are employed. The mono-, di- and/or triglycerides are generally used in amounts of at least 0.001, preferably at least 0.005, most preferably at least 0.01 percent and generally in amounts up to 0.3, preferably up to 0.15, most preferably up to 0.05 percent based on the weight of the polyvinyl(idene) aromatic compounds(s).

The dispersion of fatty acid glyceride(s) in mineral oil with which the heat expandable particles are preferably coated optionally also contains an anti-clumping agent to prevent agglomeration of the expandable particles. The anti-clumping agent can be dispersed in the oil but it can also be added separately as a dry powder to the outside of the expandable particles.

Any known anti-clumping agent is useful, for example, fine powdered inorganic compounds like silicon dioxide, talc, clay magnesium oxide or magnesium carbonate, or organic compounds like metal salts of fatty acids, for example magnesium or zinc stearate, ricinoleic acid amide and lauric acid diethanol amide. The most preferred anti-clumping agents are metal salts of fatty acids. Of these fatty acid salts, the magnesium, calcium, and zinc salts of stearic acid are preferred.

If an anti-clumping agent is employed, it is generally used in an amount of at least 0.001, preferably at least 0.005, most preferably at least 0.01 percent and up to 0.5, preferably up to 0.3, most preferably up to 0.1 percent, based on the weight of the polyvinyl(idene) aromatic compounds(s).

Furthermore, the heat expandable particles can be coated with optional additives, for example with known anti-static agents like polyethers, ethoxylated amines, e.g. N,N-bis-(2-hydroxyethyl)-alkyl amines, or sodium sulfonates. Useful anti -static agents are known in the art. If employed, the anti-static agents are generally employed in amounts of at least 0.002, preferably of at least 0.005, most preferably of at least 0.01 weight percent, up to 2, more preferably up to 1, most preferably up to 0.1 weight percent of the polyvinyl(idene) aromatic compound(s). The anti-static agent can be dispersed in the oil or added according to known coating methods separately to the outside of the expandable particles.

The heat expandable particles of a polyvinyl(idene) aromatic compound can be prepared by known suspension polymerization processes. Spherical particles may be prepared by suspension polymerization of an appropriate monomer in aqueous suspension in the presence of appropriate catalysts or polymerization initiators. A blowing agent and a rubber material, if used, can be admixed with the monomeric material prior to polymerization. The blowing agent and the rubber material, if used, can also be added during or on completion of the suspension polymerization step. A plasticizer and the optional additives such as nucleator(s), fire retardant agent(s) and filler(s) are preferably added to the reaction mixture before or during the suspension polymerization step.

Alternatively, the heat expandable particles of the present invention can be prepared by plasticizing the polyvinyl(idene) aromatic compound(s) with a plasticizer in an extruder, optionally mixed with internal additives such as rubber(s), nucleator(s), fire retardant agent(s), anti-static agent(s) or dye(s); mixing the plasticized mass with a blowing agent; extruding strands through a die having openings of circular or other cross-sectional configuration; and preferably cutting the strands into segments. Before and/or after the plasticized mass containing the blowing agent is extruded into strands, it is cooled. Preferably, the cooling takes place before and after extrusion of the mass into strand. If the mass is cooled before or during its extrusion into strands, it is preferably only cooled to a temperature above the glass transition temperature of the polyvinyl(idene) aromatic compound, for example to about 130°C. Generally the plasticized mass and/or the strands are cooled to such an extent that no significant prefoaming of the particles takes place. Preferably, the length of the resulting particles approximates about the maximum cross-sectional dimension of the strand. The particles are preferably annealed in a water bath in a known way. The preparation of heat expandable polystyrene particles by an extrusion process is known in the art.

After the preparation of the expandable particles, they are coated with one or more glycerides of a fatty acid and/or with an oil described above. The coating can also comprise further additives, e.g. anti-clumping agents and anti-static agents. Optionally a second coating can be applied to the coated particles, for instance a coating of an anti-static agent or of common additives like dyes.

The coated expandable particles can be expanded. The first or primary expansion of the heat expandable particles of the invention can be achieved by employing techniques well known in the art such as exposing the particles to hot air or steam at atmospheric pressure, subatmospheric pressure or superatomospheric pressure, depending mainly on the particular polymer utilized and the glass transition temperature of such a polymer. In the event that styrene is utilized as the principal monomeric component in the preparation of particles in accordance with the invention, steam is normally sufficient to cause the first expansion of the particles to a volume approximating that of the volume of the volatile fluid blowing agent contained therein which would be expected at the temperature of expansion. Alternatively, such particles may be expanded by exposure to heated inert gas such as air or nitrogen, which is nonreactive with the polymer under conditions of expansion. Such expansion may occur in an oven or a known expander designed specifically for expandable particles. Alternatively, such an expansion may take place by immersing the particles in a heated liquid, for example, hot water. After the initial or primary expansion of particles in accordance with the invention the particles may be aged with or without cooling in a gas such as air or nitrogen. The premolding expansion can be carried out in one or several steps, i.e. the expansionicooling cycles can be repeated several times, preferably 1 to 3 times. During the premolding expansion of the particles of a polyvinyl(idene) aromatic compound the blowing agent vaporizes and escapes to a great extent from the particles. The expanded particles still may contain blowing agent(s) in order to provide further expansion ability to the particles. The content of the blowing agent in the partially preexpanded particles is generally 0 to 2, typically 0 to 1, weight percent, based on the weight of the polyvinyl(idene) aromatic compound.

The description of the preferred embodiments of the expandable particles applies also to the expanded particles so far as the compositions and additives employed.

For producing a molded article from the expanded particles, known techniques may be used.. The expanded particles can be loaded into a mold of the desired shape, which is closed but not air-tight. The particles can be heated with a hot medium to cause expansion of the particles and fusion thereof with adjacent particles to form a substantially unitary body. The appropriate molding temperature, molding time, cooling time and other processing parameters depend on a variety of factors, e.g. on the composition of the particles and on the size of the molded article. The appropriate processing parameters can easily be determined by those skilled in the art by routine experiments.

The description of the preferred embodiments of the expandable particles applies also to the molded articles so far as the compositions and additives employed.

The molded articles produced from the expandable or expanded particles of the present invention can have a wide range of densities. The density is generally at least 6 kg/m³, preferably at least 10 kg/m³, most preferably at least 15 kg/m³, generally up to 120 kg/m³, preferably up to 35 kg/m³, most preferably up to 24 kg/m³.

Because of their flexibility, their outstanding shock absorption abilities and their good thickness recovery after compression, the molded articles are preferably, but not exclusively, used as shock absorbing packaging materials to protect fragile articles during storage and transportation and as cushioning elements, e.g. in helmets. Further uses are, for example, impact sound insulation of buildings, construction elements and shock absorbers for the outside of boat hulls.

The following examples illustrate, but should not be construed to limit, the invention. All parts and percentages are by weight. The weight average molecular weight M_{w} and the molecular weight distribution D of the polystyrene in Examples 1 to 20 and in Comparative Examples A to D are listed in Table IV below. Examples 3,4,5,7,9 to 12,17,19 and 20 are not examples of this invention.

### A. Preparation of expandable polystyrene particles

### Example 1

500 kg of a polystyrene composition containing 4.0 kg plasticizer (styrene dimers and trimers), 0.36 kg zinc stearate. 0.10 kg calcium stearate and the remainder styrene polymer are fed into an extruder. The extrusion temperatures range from 170 to 206°C. The mixture is fed into a mixer at 215°C after which 38.5 kg blowing agent (consisting of 71 percent n-pentane and 29 percent isopentane) are injected into said mixer under a pressure of 1500 psig (10.3 MPa above atomspheric).

The resulting mixture is cooled at about 130°C in a rotary cooler and the pressure is reduced to about 1000 psig (6.89 MPa above atmospheric). The cooled extrudate is passed through a die having circular openings whereby strands are formed. The strands are passed through a water bath at slightly above room temperature and cut into short pieces by a Burke Porter pellet cutter. The peliets are then annealed at about 70°C and then dried. After drying, the pellets are sprayed with a mixture of 220 g zinc stearate, 110 g of a mixture of mono- and diglycerides of stearic acid, 55 g mineral oil, commercially available from EESO S.A.F as PRIMOL® 352, and 166 g of an ethoxylated amine, commercially available from Atlas Europol as ATMER® 163.

### Examples 2 to 9

Example 1 is repeated whereby the total content of styrene trimers and dimers (plasticizer) are listed in Table I below. The polystyrene compositions of some of the examples contain additionally a mineral oil as a plasticizer, commercially available from ESSO S.A.F. as PRIMOL® 352. In all examples, 500 kg polystyrene composition are used in which the amounts of plasticizers are included. The amount of the mineral oil, the extrusion temperature range, the feed temperature into the mixer, the amount of blowing agent and the injection pressure of the blowing agent are also listed in Table I below. The temperature in the rotary cooler, the pressure reduction and the following process steps as well as the type and amount of the coating mixture are the same as in Example 1.

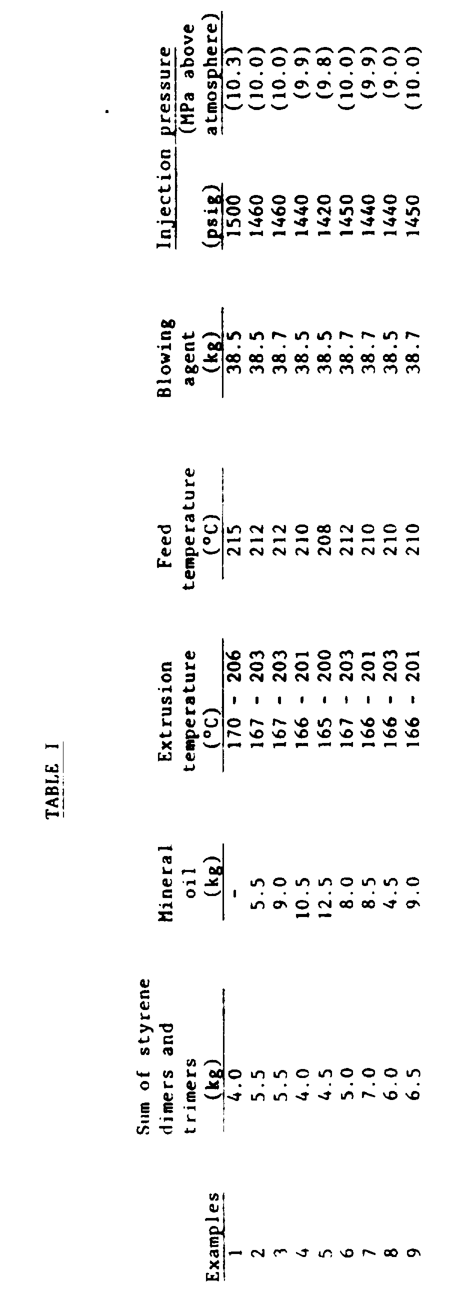

### Example 10

750 kg of a polystyrene composition containing 24.7 kg plasticizer (14.2 kg mineral oil, commercially available from EESO S.A.F. as PRIMOL® 352, and 10.5 kg styrene dimers and trimers), 0.54 kg zinc stearate, 0.15 kg calcium sterate and the remainder styrene polymer are fed into an extruder. The extrusion temperature range from 165 to 200°C. The mixture is fed into a mixer at 208°C after which 58.1 of the blowing agent of Example 1 are injected into said mixer under a pressure of 1420 psig (9.8 MPa above atmospheric).

The resulting mixture is treated as in Example 1. After drying, the pellets are sprayed with a mixture of 330 g zinc stearate, 165 g of a mixture of mono- and diglycerides of stearic acid, 83 g mineral oil, commercial available from ESSO S.A.F. as PRIMOL® 352, and 250 g of an ethoxylated amine, commercially available from Atlast Europol as ATMER® 163.

### Example 11 and 13

Example 10 is repeated whereby the total content of the styrene trimers and dimers (plasticizer) are listed in Table II. In all examples, 750 kg polystyrene composition are used in which the amounts of plasticizers (styrene trimers and dimers and in some examples mineral oil) are included. Varying amounts of additives and varying reaction conditions are listed in Table II analogously to Table I. The temperature in the rotary cooler, the pressure reduction and the following process steps as well as the type and amount of the coating mixture are the same as in Example 10.

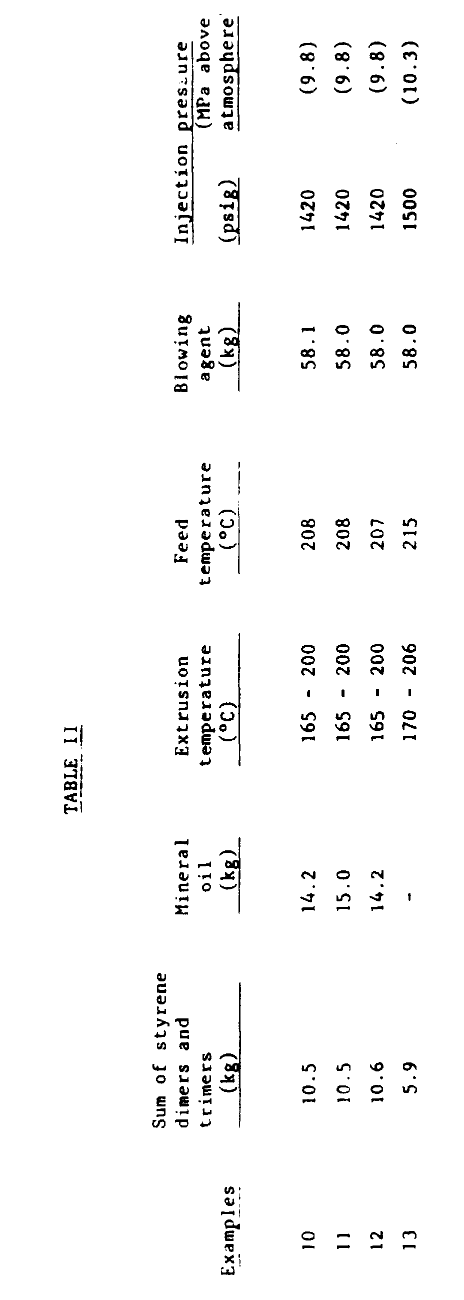

### Example 14

1000 kg of a polystyrene composition containing 18.0 kg plasticizer (7.0 kg mineral oil, commercially available from EESO S.A.F. as PRIMOL® 352, and 11.0 kg of styrene dimers and trimers), 0.7 kg zinc stearate, 0.2 kg calcium stearate and the remainder styrene polymer, are fed into an extruder. The extrusion temperature range from 168 to 204°C. The mixture is fed into a mixer at 213°C after which 77.4 kg of the blowing agent of Example 1 are injected into said mixer under a pressure of 1470 psig (10.1 MPa above atmospheric).

The resulting mixture is treated as in Example 1. After drying, the pellets are sprayed with a mixture of 440 g zinc stearate, 220 g of a mixture of mono- and diglycerides of stearic acid, 110 g mineral oil, commercially available from ESSO S.A.F. as PRIMOL® 352, and 330 g of an ethoxylated amine, commercially available from atlas Europol as ATMER 163.

### Example 15 to 18

Example 14 is repeated whereby the total content of the styrene trimers and dimers (plasticizer) are listed in Table III. In all examples, 1000 kg polystyrene compositions are used in which the amounts of plasticizers (styrene trimers and dimers and mineral oil) are included.

The amount of the blowing agent is in all Examples 15 to 18 is 77.4 kg. Varying amounts of additives and varying reaction conditions are listed in Table III analogously to Table I. The temperature in the rotary cooler, the pressure reduction and the following process steps as well as the type and amount of the coating mixture are the same as in Example 14.

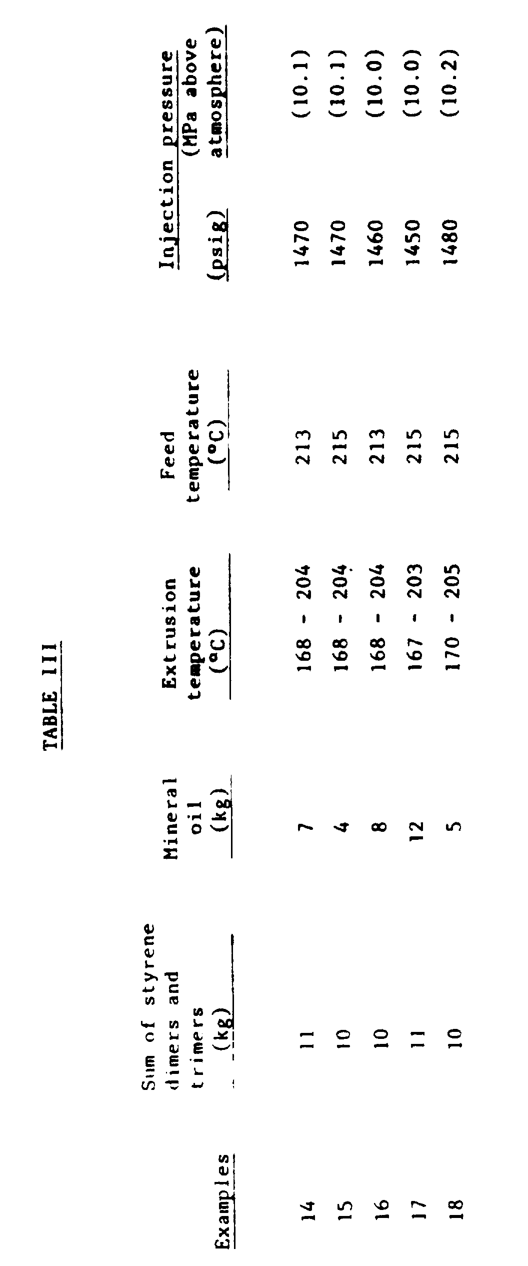

### Example 19

500 kg of a polystyrene composition containing 9.0 kg plasticizer (4.0 kg of styrene dimers and trimers and 5.0 kg of a mineral oil, commercially available from ESSO S.A.F. as PRIMOL® 352), 21 kg polybutadiene being copolymerized with polystyrene, 0.36 kg zinc sterate, 0.36 kg octadecyl-3-(3',5'-di-tert-butyl-4'-hydroxyphenyl)propionate, commericially available from CIBA-GEIGY AG as IRGANOX® 1076, 0.10 kg calcium stearte and the remainder styrene polymer, are fed into an extruder. The extrusion temperatures range from 170 to 206°C. The mixture is fed into a mixer at 215°C after which 35 kg of the blowing agent of Example 1 are injected into said mixer under a pressure of 1800 psig (12.4 MPa above atmospheric).

The resulting mixture is processed to particles as in Example 1 which are then sprayed as in Example 1.

### Example 20

Example 19 is repeated, however, using 7.5 kg mineral oil instead of 5.0 kg.

### Comparative Example A

500 kg of a polystyrene composition containing 5.0 kg plasticizer (styrene dimers and trimers), 0.36 zinc sterate and 0.10 kg calcium stearate and the remainder styrene polymer are fed into an extruder. The extrusion temperature range from 167 to 203°C. The mixture is fed into a mixer at 212°C after which 38.5 kg of the blowing agent of Example 1 are injected into said mixer under a pressure of 1500 psig (10.3 MPa above atmospheric).

Particles are produced as described in Example 1, however, the produced particles are not coated.

### Comparative Examples B to D

Commercially available expandable polystyrene beads produced according to suspension polymerization are used for the production of molded, foamed articles.

### B. Prefoaming and production of the molded articles

The expandable particles according to Examples 1 to 20 and Comparative Examples A to D are expanded by supplying 102°C steam at 0.1 bar. Thereby, the temperature of the pellets is held at about 90 to 100°C. The densities of the molded final products can be controlled by the residence time of the particles in the commercially available expanding equipment. The residence times are between 2.5 min. and 4 min. for foam densities between 23 Kg/m³ and 16 kg/m³. Afterwards the expanded particles are left at room temperature for about 24 hours.

Twenty-four hours after expansion, the expanded particles are loaded in a mold and heated by injection of 108°C steam at 0.4 bar to cause further expansion and fusion of the particles to prepare a uniform, molded article.

Table IV lists the weight average molecular weight M_{w} and the molecular weight distribution D of the polystyrene; the total amount of plasticizer (sum of mineral oil, styrene, dimers and trimers) as percentage, based on the total weight of the polystyrene composition (including the styrene polymer, plasticizer, internal zinc stearate and calcium stearate and, in Example 19 and 20, rubber but not including the blowing agent and the external coatings); the foam density; the tensile elongation; the tensile strength: the average shock absorption ability at the 2nd to the 5th drop test; the shock absorption ability at the 5th drop test; and the thickness recovery after the fifth drop test (as percentage of the original thickness) of the molded, foamed articles.

The foam density is measured according to DIN 53420.

The tensile strength and the tensile elongation are measured according to DIN 53571. The shock absorbing characteristics of the molded foam pieces are determined in a drop test according to ASTM D 1596-64.

The shock absorbing characteristics are expressed as G at "valley". The original thickness of the foam piece is 50 mm. The drop height is 750 mm. The drop head weight is 8 kg.

The static loading at "valley" (minimum) is 2.5 kPa in Examples 5. 7, 10, 11 and 12 and 5 kPa in the other Examples and in Comparative Examples A to D.

The average value of G at the 2nd to the 5th drop test and G at the 5th test are listed. In Table IV, Examples 3,4,5,7,9,10,11,12,17,19 and 20 are not examples of this invention.

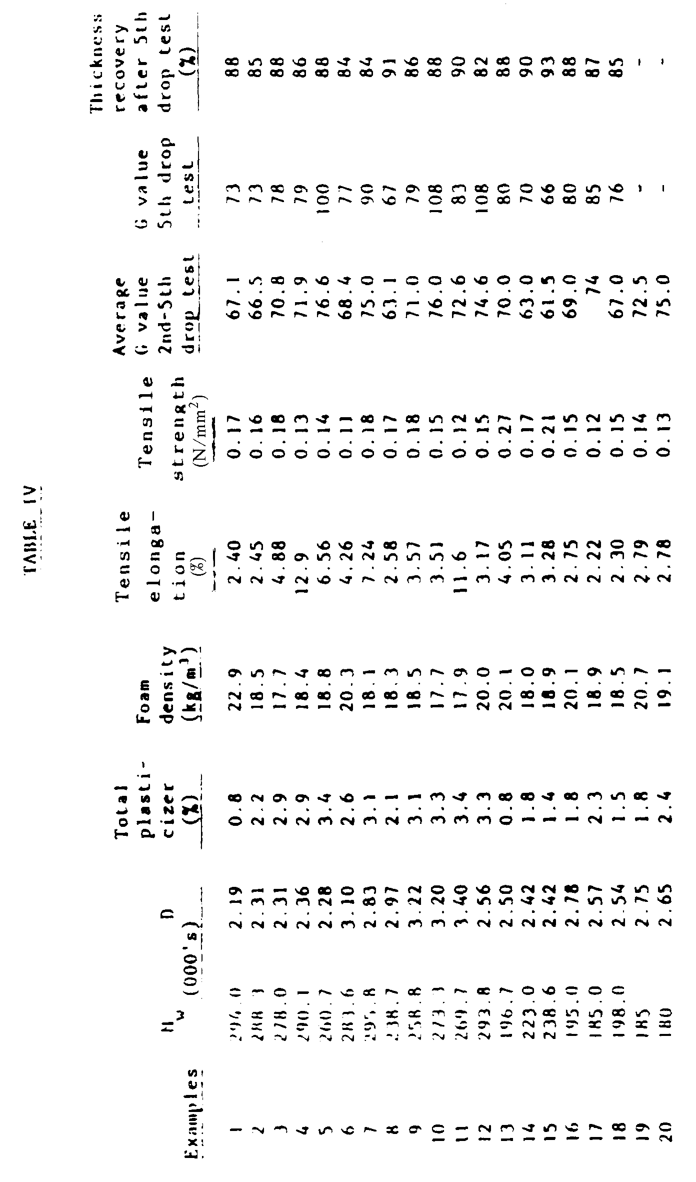

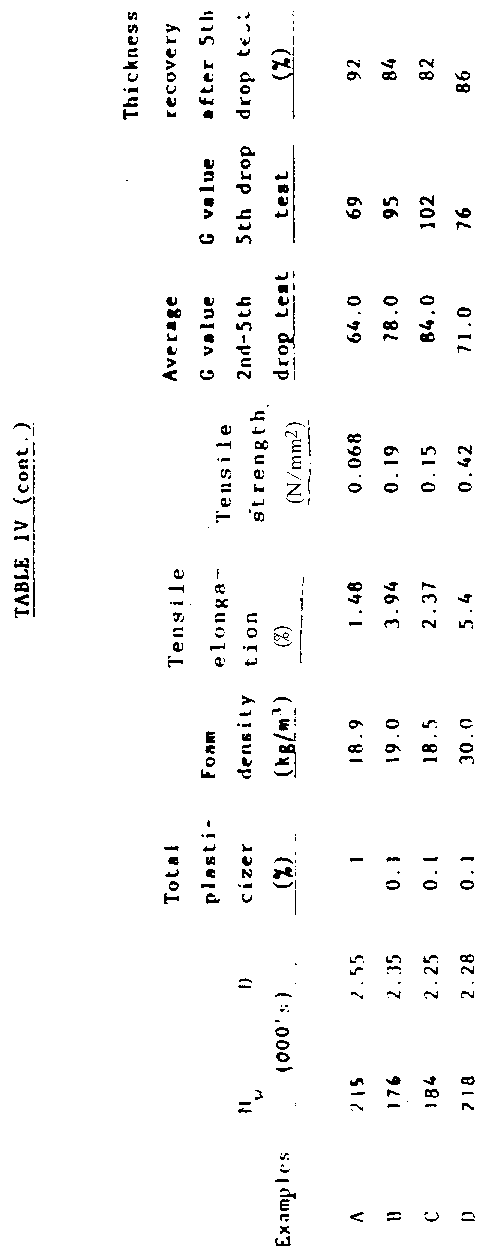

The data of Table IV illustrate that the molded, foamed articles of the present invention have good balance of low G (demonstrating that shock absorbing ability of the molded article of the invention is good); good thickness recovery even after the 5th drop test; and tensile strength and tensile elongation which are adeduate for their intended use. Table IV further demonstrates that the best results are obtained at a total plasticizer content of from 0.8 to 3 weight percent, preferably from 0.8 to 2.6 percent, based on the total weight of polystyrene and plasticizer (at similar average molecular weight M_{w}) and if the weight average molecular weight is about 200,000 or more. The molded, foamed articles of the present invention have a good appearance and a rubbery texture, i.e. smooth and soft surfaces. This is particularly important when the foamed material is used as packaging material for expensive equipment such as radios, microwave ovens or computers where scratches on the surface are to be avoided. The fusion of the particles in the mold is good and the cooling time of the molded articles is relatively short (between 6 and 18 minutes in a mold of 25 cm x 25 cm x 50 cm and less than a minute in a mold of 20 cm x 20 cm x 5 cm).

The molded, foamed part of Comparative Example A has good shock absorption ability but very low tensile strength and tensile elongation.

The molded, foamed articles of Comparative Examples B and C do not have good shock absorption ability and thickness recovery after compression and do not have smooth and soft surfaces.

The molded, foamed article of Comparative Example D has good properties. However, it is not comparable with the mold, foamed articles of Examples 1 to 20 since it has a density which is 1.5 times as high as the densities of all the other produced and tested foamed articles. A lower density is not achieved with commercially available material of Comparative Example D under conditions which are comparable to those used for producing the other molded, foamed articles. The molded, foamed article of Comparative Example D does not have smooth and soft surfaces.

## Claims

1. Heat expandable particles of a polyvinyl(idene) aromatic compound containing a blowing agent, characterized in that the polyvinyl(idene) aromatic compound has a weight average molecular weight M_{w} of more than 190,000, the particles contain from 0.8 to 2.6 percent of a mineral oil and/or an aromatic oligomer as a plasticizer, based on the total weight of the polyvinyl(idene) aromatic compound and plasticizer, and the particles are at least partially coated with one or more glycerides of a fatty acid and/or with a mineral oil.

2. The particles of Claim 1, characterized in that the weight average molecular weight M_{w} of the polyvinyl(idene) aromatic compound is from 200,000 to 300,000.

3. The particles of any one of Claims 1 and 2, characterized in that the amount of the plasticizer is from 0.8 to 2.2 percent, based on the total weight of the polyvinyl(idene) aromatic compound and the plasticizer.

4. The particles of Claim 3, characterized in that the amount of the plasticizer is from 1.0 to 2.2 percent, based on the total weight of the polyvinyl(idene) aromatic compound and the plasticizer.

5. The particles of any one of Claims 1 to 4, characterized in that the polyvinyl(idene) aromatic compound has a weight average molecular weight M_{w} of 220,000 to 260,000 and the amount of the plasticizer is from 1.0 to 2.2 percent, based on the total weight of the polyvinyl(idene) aromatic compound and the plasticizer.

6. The particles of any one of Claims 1 to 5, characterized in that the plasticizer is a mineral oil, an aromatic dimer, an aromatic trimer or a mixture thereof.

7. The particles of Claim 6, characterized in that the aromatic dimer and/or trimer amounts to 30 to 100 percent of the total plasticizer weight.

8. The particles of any one of Claims 1 to 7, characterized in that the polyvinyl(idene) aromatic compound is a styrene homo- or copolymer.

9. The particles of any one of Claims 1 to 8, characterized in that they contain a rubber in an amount of up to 10 percent, based on the total weight of the particles.

10. The particles of Claim 9, characterized in that they contain as rubber polybutadiene or a styrene/butadiene copolymer in an amount of from 0.5 to 5 percent, based on the total weight of the particles.

11. The particles of any one of Claims 1 to 10, characterized in that the coating of the particles comprises from 0.003 to 0.15 percent of a mineral oil and from 0.005 to 0.15 percent of mono-, di- and/or triglycerides of a fatty acid, based on the weight of the polyvinyl(idene) aromatic compound.

12. A process for preparing the heat expandable particles of any one of Claims 1 to 11 by plasticizing a polyvinyl(idene) aromatic compound with the plasticizer and optional additives in an extruder, mixing the plasticized mass with a blowing agent, cooling the mass before and/or after extruding it into strands, dividing the strands into particles and coating the particles at least partially with one or more glycerides of a fatty acid and/or with a mineral oil.

13. Heat expanded particles of a polyvinyl(idene) aromatic compound, characterized in that the polyvinyl(idene) aromatic compound has a weight average molecular weight M_{w} of more than 190,000, the particles contain from 0.8 to 2.6 percent of a mineral oil and/or an aromatic oligomer as a plasticizer, based on the total weight of the polyvinyl(idene) aromatic compound and plasticizer, and the particles are at least partially coated with one or more glycerides of fatty acid and/or with a mineral oil.

14. A molded, foamed article made of the heat expanded particles of Claim 13.

15. A method for preparing a molded, foamed article by
a. heating a plurality of the heat expandable particles of any one of Claims 1 to 11 to cause some expansion thereof and provide expanded particles,
b. confining a quantity of the expanded particles in a mold, and
c. heating the particles in the mold to cause further expansion of the expanded particles and to cause the particles in the mold to bond together to form a substantially unitary body.

16. Use of the molded, foamed article of Claim 15 as packaging material.

## Revendications

1. Particules expansibles par la chaleur, en un polymère vinyl(idène) aromatique contenant un agent gonflant, caractérisées en ce que le polymère vinyl(idène) aromatique possède un poids moléculaire moyen M_{w} (moyenne en poids) supérieur à 190 000, en ce que les particules contiennent de 0,8 à 2,6 pour cent d'huile minérale et/ou d'un oligomère aromatique, comme plastifiant, par rapport au poids total du polymère vinyl(idène) aromatique et du plastifiant, et en ce que les particules sont enrobées au moins partiellement d'un ou plusieurs glycérides d'un acide gras et/ou d'une huile minérale.

2. Particules suivant la revendication 1, caractérisées en ce que le poids moléculaire moyen M_{w}-(moyenne en poids) du polymère vinyl(idène) aromatique est compris entre 200 000 et 300 000.

3. Partiales suivant l'une quelconque des revendications 1 à 2, caractérisées en ce que la proportion du plastifiant est de 0,8 à 2,2 pour cent par rapport au poids total du polymère vinyl(idène) aromatique et du plastifiant.

4. Particules suivant la revendication 3, caractérisées en ce que la proportion du plastifiant est de 1,0 à 2,2 pour cent par rapport au poids total du polymère vinyl(idène) aromatique et du plastifiant.

5. Particules suivant l'une quelconque des revendications 1 à 4 caractérisées en ce que le polymère vinyl(idène) aromatique possède un poids moléculaire moyen M_{w} (moyenne en poids) de 220 000 à 260 000 et en ce que la proportion du plastifiant est de 1,0 à 2,2 pour cent par rapport au poids total de ce composé et du plastifiant.

6. Particules suivant l'une des revendications 1 à 5, caractérisées en ce que le plastifiant est une huile minérale, un dimère aromatique, un trimère aromatique ou un mélange de ceux-ci.

7. Particules suivant la revendication 6, caractérisés en ce que le dimère aromatique et/ou le trimère aromatique sont présents dans une proportion de 30 à 100 pour cent par rapport au poids total de plastifiant.

8. Particules suivant l'une quelconque des revendications 1 à 7, caractérisées en ce que le polymère vinyl(idène) aromatique est un homopolymère ou copolymère de styrène.

9. Particules suivant l'une quelconque des revendications 1 à 8, caractérisées en ce qu'elles contiennent un caoutchouc dans une proportion pouvant atteindre 10 pour cent par rapport au poids total des particules.

10. Particules suivant la revendication 9, caractérisées en ce qu'elle contiennent, comme caoutchouc, du polybutadiène ou un copolymère styrène/butadiène dans une proportion de 0,5 à 5 pour cent par rapport au poids total des particules.

11. Particules suivant l'une des revendications 1 à 10, caractérisées en ce que l'enrobage de ces particules comprend de 0,003 à 0,15 pour cent d'une d'huile minérale et de 0,005 à 0,15 pour cent de monoglycérides, diglycérides et/ou triglycérides d'un acide gras par rapport au poids du polymère vinyl(idène) aromatique.

12. Procédé de préparation des particules expansibles par la chaleur suivant l'une quelconque des revendications 1 à 11, consistant à plastifier, dans une extrudeuse, un polymère vinyl(idène) aromatique à l'aide du plastifiant et d'additifs facultatifs, à mélanger la masse plastifiée avec un agent gonflant, à refroidir cette masse avant et/ou après l'avoir extrudée sous forme de boudins, à diviser ces boudins en particules et à enrober ces particules au moins partiellement à l'aide d'un ou plusieurs glycérides d'un acide gras et/ou à l'aide d'une huile minérale.

13. Particules expansées par la chaleur, en polymère vinyl(idène) aromatique, caractérisées en ce que le polymère vinyl(idène) aromatique possède un poids moléculaire moyen M_{w} (moyenne en poids) supérieur à 190 000, en ce que les particules contiennent de 0,8 à 2,6 pour cent d'une huile minérale et/ou d'un oligomère aromatique comme plastifiant, par rapport au poids total du composé formé d'un polymère vinyl(idène) aromatique et du plastifiant, et en ce que les particules sont enrobées au moins partiellement à l'aide d'un ou plusieurs glycérides d'un acide gras et/ou à l'aide d'une huile minérale.

14. Article mousse moulé réalisé à l'aide des particules expansées par la chaleur suivant la revendication 13.

15. Procédé de préparation d'un article mousse moulé, consistant:
(A) à élever la température d'un grand nombre de particules expansibles par la chaleur suivant l'une queconque des revendications 1 à 11, de façon à provoquer une certaine expansion de celles-ci et à réaliser des particules expansées,
(B) à enfermer dans un moule une certaine quantité de ces particules expansées et
(C) à élever la température des particules se trouvant dans le moule de façon à provoquer une expansion supplémentaire des particules expansées et à faire adhérer entre elles les particules se trouvant dans le moule de façon à former une masse partiquement d'un seul bloc.

16. Utilisation d'un article en mousse moulé suivant la revendication 14 en tant que matériau d'emballage.

## Patentansprüche

1. Durch Wärme ausdehnbare Teilchen einer polyvinyl(iden)aromatischen Verbindung, ein Treibmittel enthaltend, **dadurch gekennzeichnet**, dass die polyvinyl(iden)aromatische Verbindung ein gewichtsmittleres Molekulargewicht M_{w} von mehr als 190.000 aufweist, die Teilchen von 0,8 - 2,6 Prozent, bezogen auf Gesamtgewicht der polyvinyl(iden)-aromatischen Verbindung und Weichmacher, eines Mineralöls und/oder eines aromatischen Oligomers als Weichmacher enthalten und die Teilchen mindestens teilweise mit einem oder mehreren Glyceriden einer Fettsäure und/oder mit einem Mineralöl überzogen sind.

2. Teilchen nach Anspruch 1, **dadurch gekennzeichnet**, dass das gewichtsmittlere Molekulargewicht M_{w} der polyvinyl(iden)aromatischen Verbindung von 200.000 - 300.000 beträgt.

3. Teilchen nach jedem der Ansprüche 1 - 2, **dadurch gekennzeichnet**, dass die Menge des Weichmachers von 0,8 - 2,2 Prozent, bezogen auf Gesamtgewicht der polyvinyl(iden)aromatischen Verbindung und Weichmacher, beträgt.

4. Teilchen nach Anspruch 3, **dadurch gekennzeichnet**, dass die Menge des Weichmachers von 1,0 - 2,2 Prozent, bezogen auf Gesamtgewicht der polyvinyl(iden)aromatischen Verbindung und Weichmacher, beträgt.

5. Teilchen nach jedem der Ansprüche 1 - 4, **dadurch gekennzeichnet**, dass die polyvinyl(iden)aromatische Verbindung ein gewichtsmittleres Molekulargewicht M_{w} von 220.000-260.000 aufweist und die Menge des Weichmachers von 1,0 - 2,2 Prozent, bezogen auf Gesamtgewicht der polyvinyl(iden)aromatische Verbindung und Weichmacher, beträgt.

6. Teilchen nach jedem der Ansprüche 1 - 5, **dadurch gekennzeichnet**, dass der Weichmacher ein Mineralöl, ein aromatisches Dimer, ein aromatisches Trimer oder eine Mischung derselben ist.

7. Teilchen nach Anspruch 6, **dadurch gekennzeichnet**, dass das aromatische Dimer und/oder Trimer 30 - 100 Prozent des Gesamtgewichtes an Weichmacher ausmacht.

8. Teilchen nach jedem der Ansprüche 1 - 7, **dadurch gekennzeichnet**, dass die polyvinyl(iden)-aromatische Verbindung ein Styrolhomo- oder Copolymer ist.

9. Teilchen nach jedem der Ansprüche 1 - 8, **dadurch gekennzeichnet**, dass sie einen Kautschuk in einer Menge von bis zu 10 Prozent, bezogen auf Gesamtgewicht der Teilchen, enthalten.

10. Teilchen nach Anspruch 9, **dadurch gekennzeichnet**, dass sie als Kautschuk Polybutadien oder ein Styrol/Butadiencopolymer enthalten in einer Menge von 0,5 - 5 Prozent, bezogen auf Gesamtgewicht der Teilchen.

11. Teilchen nach jedem der Ansprüche 1 - 10, **dadurch gekennzeichnet**, dass die Beschichtung der Teilchen von 0,003 - 0,15 Prozent eines Mineralöls und von 0,005 - 0,15 Prozent Mono-, Di- und/oder Triglyceride einer Fettsäure, bezogen auf Gewicht der polyvinyl(iden)aromatischen Verbindung, enthält.

12. Verfahren zum Herstellen der durch Wärme ausdehnbaren Teilchen nach jedem der Ansprüche 1 - 11 durch Weichmachen einer polyvinyl(iden)aromatischen Verbindung mit dem Weichmacher und gegebenenfalls Zusätzen in einem Extruder, Mischen der weichgemachten Masse mit einem Treibmittel, Kühlen der Masse vor und/oder nach Extrudieren in Stränge, Aufteilen der Stränge in Teilchen und Überziehen der Teilchen mindestens teilweise mit einem oder mehreren Glyceriden einer Fettsäure und/oder mit einem Mineralöl.

13. Durch Wärme ausgedehnte Teilchen einer polyvinyl(iden)aromatischen Verbindung, **dadurch gekennzeichnet**, dass die polyvinyl(iden)aromatische Verbindung ein gewichtsmittleres Molekulargewicht M_{w} von mehr als 190.000 aufweist, die Teilchen von 0,8 - 2,6 Prozent, bezogen auf Gesamtgewicht der polyvinyl(iden)-aromatische Verbindung und Weichmacher, eines Mineralöls und/oder eines aromatischen Oligomers als Weichmacher enthalten und die Teilchen mindestens teilweise mit einem oder mehreren Glyceriden einer Fettsäure und/oder mit Mineralöl überzogen sind.

14. Geformter, aufgeschäumter Gegenstand, hergestellt aus durch Wärme ausgedehnte Teilchen nach Anspruch 13.

15. Verfahren zum Herstellen eines geformten, aufgeschäumten Gegenstandes durch
(A) Erwärmen einer Vielzahl von durch Wärme ausdehnbaren Teilchen nach jedem der Ansprüche 1 - 11, um Ausdehnung derselben zu verursachen und expandierte Teilchen zu schaffen,
(B) Einschliessen einer Menge der expandierten Teilchen in einer Form und
(C) Erwärmen der Teilchen in der Form, um weitere Ausdehnung der ausgedehnten Teilchen auszulösen und um die Teilchen in der Form aneinanderzubinden, um einen im wesentlichen einheitlichen Körper auszubilden.

16. Verwendung des geformten, aufgeschäumten Gegenstandes nach Anspruch 14 als Verpackungsmaterial.
